# EUROPÄISCHE PATENTANMELDUNG

(11) **EP 1 787 799 A1**
(43) Veröffentlichungstag der Anmeldung: **23.05.2007**
(21) Anmeldenummer: 05405643.7
(22) Anmeldetag: 17.11.2005
(51) Int. Cl.: B32B 15/08, B32B 15/20

(54) **Verbundmaterial und daraus hergestellte Behälter und Deckel**

(71) Anmelder: Alcan Technology & Management Ltd., 8212 Neuhausen am Rheinfall (CH)
(72) Erfinder: Bijsterbosch, Albert, 8181 ZL Heerde (NL); Verbeek, Dick, 7325 PC Apeldoorn (NL)

(57) **Zusammenfassung**

Ein tiefziehbares Verbundmaterial (30) weist eine einseitig mit einem geschlossenzelligen Schaum (34) aus einem Kunststoff beschichtete Aluminiumfolie (32) auf. Das Verbundmaterial eignet sich zur Herstellung tiefgezogener Behälter mit guter thermischer Isolation bei geringem Gewicht und hoher Beulfestigkeit.

## Beschreibung

Die Erfindung betrifft ein tiefziehbares Verbundmaterial mit einer Aluminiumfolie und daraus hergestellte Behälter und Deckel.

Sterilisierbare Behälter aus halbstarrem Material sind bekannt und werden beispielsweise zur Verpackung von lang haltbaren Produkten, wie z. B. Tierfutter, oder von zum späteren Aufwärmen im Mikrowellen- oder Backofen vorbereiteten Speisen verwendet.

Die Behälter bestehen häufig aus einer beispielsweise goldfarbig lackierten und durch Tiefziehen geformten Aluminiumfolie. Ein peelbar auf den Behälter aufgesiegelter Deckel ist üblicherweise aus demselben Material wie der Behälter gefertigt.

Die genannten Behälter sind nur wenig beulfest, und für das Aufwärmen von Fertiggerichten wären Behälter mit einer besseren Wärmeisolation wünschenswert.

Der Erfindung liegt die Aufgabe zugrunde, ein zur Herstellung tiefgezogener Behälter und Deckel geeignetes Verbundmaterial der eingangs genannten Art zu schaffen, die eine im Vergleich zu Behältern nach dem Stand der Technik höhere Beulfestigkeit und niedrigere Wärmeleitfähigkeit aufweisen.

Erfindungsgemäss wird die Aufgabe dadurch gelöst, dass die Aluminiumfolie einseitig mit einem geschlossenzelligen Schaum aus einem Kunststoff beschichtet ist.

Als geschlossenzelliger Kunststoffschaum kann beispielsweise ein durch Extrusion oder durch Expansion hergestellter Schaum aus einem Polyolefin, insbesondere Polypropylen (PP), eingesetzt werden. Neben den genannten Polyolefinschaumschichten sind auch durch Extrusion hergestellte Schaumschichten aus Polyethylenterephthalat (PET) als C-PET oder A-PET geeignet.

Ein Schaum aus Polypropylen (PP) weist folgende spezifische Eigenschaften auf:
- Temperaturbeständigkeit bis etwa 130 °C
- Härte einstellbar von weich (flexibel) bis hart
- Beständigkeit gegen die meisten Chemikalien, wie z. B. Lösemittel, Kraftstoffe und Schmiermittel
- Ausgezeichnete Thermoform- und Schneideigenschaften
- Direktlaminierung mit geeigneten Dekormaterialien ohne Kleber
- 100 % recyklierbar

Ein Schaum aus Polyethylenterephthalat (PET) weist folgende spezifische Eigenschaften auf:
- Hohe Temperatur- und mechanische Beständigkeit
- Ausgezeichnete chemische Beständigkeit gegen die meisten üblichen Lösemittel, petrochemischen Stoffe, Säuren usw.
- Wasserdampfdurchlässigkeit ist kleiner als bei anderen Polymerschäumen
- Ausgezeichnete Thermoform- und Schneideigenschaften
- 100 % recyklierbar

Der Kunststoffschaum kann als aussenliegende Beschichtung als "soft touch feeling" oder als Kernschicht zwischen zwei Aluminiumfolien angeordnet sein.

Zwischen der Aluminiumfolie und der Schaumschicht kann eine Haftschicht aus Polypropylen (PP) oder Polyethylen (PE) angeordnet sein.

Auf einer Seite der Aluminiumfolie kann eine Heisssiegelschicht aus Polypropylen (PP) oder Polyethylen (PE) angeordnet sein.

Bei einem aus dem erfindungsgemässen tiefziehbaren Verbundmaterial durch Tiefziehen hergestellten Behälter und bei einem auf dem Behälter aufgesiegelten Deckel kann die Schaumschicht zur Erzeugung eines "soft touch feeling" an der die Aussenseite des Behälters bzw. des Deckels bildenden Seite des Verbundmaterials angeordnet sein.

Bei einer anderen Ausführung eines aus dem erfindungsgemässen tiefziehbaren Verbundmaterial durch Tiefziehen hergestellten Behälters und eines auf dem Behälter aufgesiegelten Deckels kann der Kunststoffschaum auch als Kernschicht zwischen zwei Aluminiumfolien angeordnet sein.

An der die Innenseite des Behälters oder die Innenseite eines auf den Behälter aufgesiegelten Deckels bildenden Seite des Verbundmaterials kann eine Heisssiegelschicht aus Polypropylen (PP) oder Polyethylen (PE) angeordnet sein.

Ein aus dem erfindungsgemässen tiefziehbaren Verbundmaterial durch Tiefziehen hergestellter Behälter zeichnet sich aus durch eine gute thermische Isolation bei geringem Gewicht als Folge der niedrigen Dichte des Kunststoffschaums und eine hohe Beulfestigkeit als Folge eines hohen Absorptionsvermögens für kinetische Energie durch plastische Verformung sowie einer gewissen Elastizität. Hinzu kommt ein ansprechendes Erscheinungsbild durch die spezielle Oberflächenschicht aus Kunststoffschaum in Verbindung mit einem "soft touch feeling".

Ein Anwendungsgebiet für aus dem Verbundmaterial hergestellte Behälter liegt in der Verpackung stossempfindlicher Güter, insbesondere im Bereich pharmazeutischer Produkte und medizinischer Geräte.

Behälter können als Trinkbecher für heisse Getränke mit oder ohne Deckel verwendet werden.

Ein anderer Verwendungszweck der Behälter sind Ein- oder Mehrportionenverpackungen mit aufgesiegeltem Deckel für die Verpackung von Füllgütern, die zum Erwärmen im Mikrowellenofen vorgesehen sind.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 eine Schrägsicht auf einen Behälter mit teilweise geöffnetem Deckel;
- Fig. 2 die Draufsicht auf den Behälter von Fig. 1;
- Fig. 3 einen Querschnitt durch den Behälter von Fig. 1 nach der Linie I-I von Fig. 2;
- Fig. 4 einen Schnitt durch ein erstes Verbundmaterial für Behälter und Deckel;
- Fig. 5 einen Schnitt durch ein zweites Verbundmaterial für Behälter und Deckel;
- Fig. 6 einen Schnitt durch ein drittes Verbundmaterial für Behälter und Deckel;
- Fig. 7 einen Schnitt durch ein viertes Verbundmaterial für Behälter und Deckel;
- Fig. 8 einen Schnitt durch ein fünftes Verbundmaterial für Behälter und Deckel.

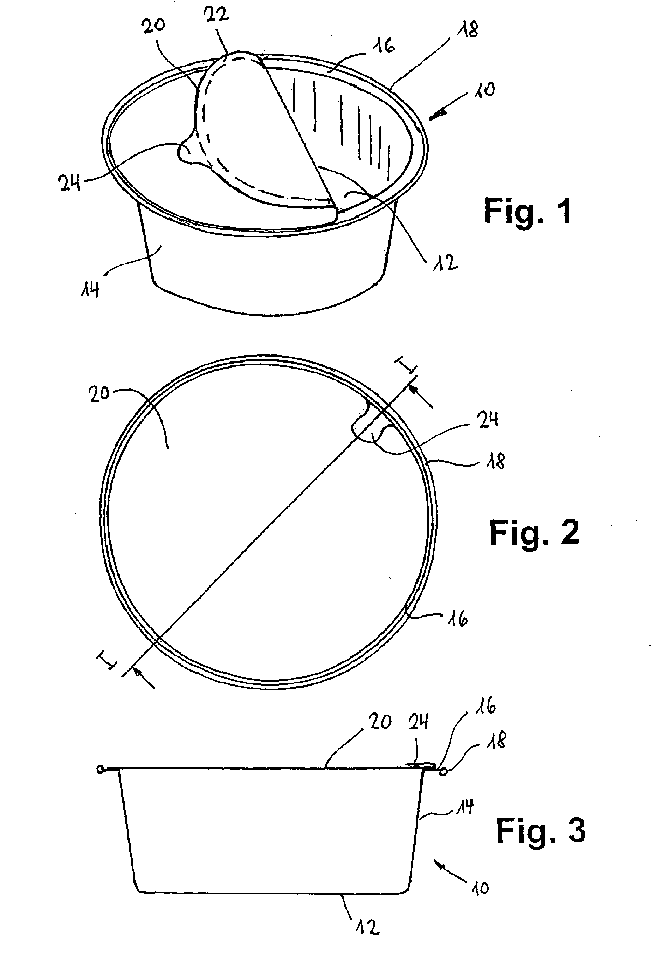

Ein in den Figuren 1 bis 3 dargestellter halbstarrer Behälter 10 zur Aufnahme von beispielsweise Tierfutter weist einen Boden 12 und eine von diesem aufragende, ein Füllgutvolumen begrenzende Seitenwand 14 auf. Vom Boden 12 erstreckt sich die Seitenwand 14 mit einem auswärts gerichteten Neigungswinkel von 1° bis 12° nach oben und geht an ihrem bodenfernen Ende in eine horizontal nach aussen abragende, ringförmige Siegelfläche 16 einer Breite von z.B. 2,5 bis 5,0 mm über. Der nach der Siegelfläche 16 verbleibende Teil der Seitenwand 14 wird als Behälterrand 18 so nach aussen gerollt, dass die obere Kante des beispielsweise einen Durchmesser von 1,0 bis 2,5 mm aufweisenden Rollrandes 18 oberhalb der durch die Siegelfläche 16 gebildeten Ebene liegt.

Der äussere Durchmesser der Behälter 10 beträgt beispielsweise 60 bis 150 mm, die Höhe 27,5 bis 72, 5 mm.

Ein den Behälter 10 verschliessender Deckel 20 ist über einen äusseren Siegelrand 22 gegen die Siegelfläche 16 des Behälters 10 gesiegelt.

In dem in den Fig. 1 bis 3 gezeigten Beispiel ist der Deckel 20 peelbar ausgebildet und lässt sich über eine ausserhalb des Siegelrandes 22 angeordnete Aufreisslasche 24 von der Siegelfläche 16 des Behälters 10 abziehen.

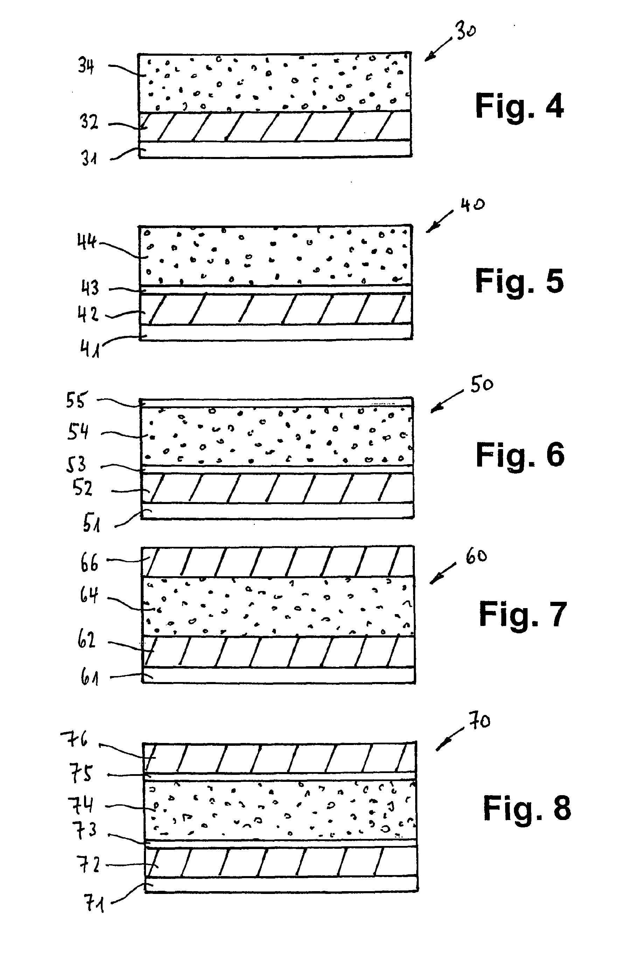

Ein in Fig. 4 gezeigter erster Aufbau eines zur Herstellung von Behältern 10 und Deckeln 20 geeigneten Verbundmaterials 30 besteht aus einer Aluminiumfolie 32, deren eine Seite mit einer Schicht 34 aus geschlossenzelligem Kunststoffschaum versehen ist und deren anderen Seite eine Siegelschicht 31 aufweist.

Ein in Fig. 5 gezeigtes zweites, zur Herstellung von Behältern 10 und Deckeln 20 geeignetes Verbundmaterial 40 besteht aus einer Aluminiumfolie 42, deren eine Seite über eine Haftschicht 43 mit einer Schicht 44 aus geschlossenzelligem Kunststoffschaum verbunden ist und deren anderen Seite eine Siegelschicht 41 aufweist.

Ein in Fig. 6 gezeigtes drittes, zur Herstellung von Behältern 10 und Deckeln 20 geeignetes Verbundmaterial 50 besteht aus einer Aluminiumfolie 52, deren eine Seite über eine Haftschicht 53 mit einer Schicht 54 aus geschlossenzelligem Kunststoffschaum verbunden ist und deren anderen Seite eine Siegelschicht 51 aufweist. Die freie Seite der Kunststoffschaumschicht 54 ist mit einer kompakten Kunststoffschicht 55 beschichtet.

Ein in Fig. 7 gezeigtes viertes, zur Herstellung von Behältern 10 und Deckeln 20 geeignetes Verbundmaterial 60 besteht aus einer ersten Aluminiumfolie 62, deren eine Seite mit einer Schicht 64 aus geschlossenzelligem Kunststoffschaum verbunden ist und deren anderen Seite eine Siegelschicht 61 aufweist. Die zweite Seite der Kunststoffschaumschicht 64 ist mit einer zweiten Aluminiumfolie 66 verbunden.

Ein in Fig. 8 gezeigtes fünftes, zur Herstellung von Behältern 10 und Deckeln 20 geeignetes Verbundmaterial 70 besteht aus einer ersten Aluminiumfolie 72, deren eine Seite über eine erste Haftschicht 73 mit einer Schicht 74 aus geschlossenzelligem Kunststoffschaum verbunden ist und deren anderen Seite eine Siegelschicht 71 aufweist. Die zweite Seite der Kunststoffschaumschicht 74 ist über eine zweite Haftschicht 75 mit einer zweiten Aluminiumfolie 76 verbunden.

Als geschlossenzelliger Kunststoffschaum kann beispielsweise ein durch Extrusion oder durch Expansion hergestellter Schaum aus einem Polyolefin, insbesondere Polypropylen (PP), eingesetzt werden. Neben den genannten Polyolefinschaumschichten sind auch durch Extrusion hergestellte Schaumschichten aus Polyethylenterephthalat (PET) als C-PET oder A-PET geeignet. Die Dicke der Schaumschichten beträgt bevorzugt 500 bis 2000 µm.

Die als Tiefziehmedium eingesetzte Aluminiumfolie weist für den Behälter 10 und für den Deckel 20 eine Dicke von 20 bis 160 µm auf.

Die zur Verbesserung der Haftung zwischen Aluminiumfolie und Schaumschicht eingesetzten Haftschichten sind bevorzugt Schichten auf der Basis von Polypropylen (PP) oder Polyethylen (PE) und weisen eine bevorzugte Dicke von 10 bis 60 µm auf.

Geeignete Siegelschichten sind Heisssiegelschichten auf der Basis von Polypropylen (PP) oder Polyethylen (PE) in einer Schichtdicke von 20 bis 200 µm. Eine dicke Siegelschicht kann gleichzeitig auf Behälter 10 und Deckel 20 auftreffende Stösse absorbieren und so Beschädigungen der Verpackung vermindem.

Anstelle der Heisssiegelschichten aus Polyethylen (PE) und Polypropylen (PP) kann auch ein Heisssiegellack verwendet werden.

Das Verbundmaterial bzw. die daraus hergestellten Behälter und Deckel können einseitig bedruckt und/oder mit einer Lackschicht versehen sein. Die Lackschicht des Behälter- und Deckelmaterials ist üblicherweise farbig. Bevorzugte Farben sind gold, silbern, weiss, blau, grün, purpurn und rot.

## Patentansprüche

1. Tiefziehbares Verbundmaterial (30, 40, 50, 60, 70) mit einer Aluminiumfolie (32, 42, 52, 62, 66, 72, 76),
**dadurch gekennzeichnet, dass**
die Aluminiumfolie (32, 42, 52, 62, 72) einseitig mit einem geschlossenzelligen Schaum (34, 44, 54, 64, 74) aus einem Kunststoff beschichtet ist.

2. Verbundmaterial nach Anspruch 1, **dadurch gekennzeichnet, dass** der Kunststoffschaum (34, 44, 54, 64, 74) ein extrudierter oder expandierter Schaum aus Polypropylen (PP) oder ein extrudierter Schaum aus Polyethylenterephthalat (PET; C-PET, A-PET) ist.

3. Verbundmaterial nach Anspruch 1 oder 2, **dadurch gekennzeichnet, dass** der Kunststoffschaum (64, 74) als Kernschicht zwischen zwei Aluminiumfolien (62, 66; 72, 76) angeordnet ist.

4. Verbundmaterial nach einem der Ansprüche 1 bis 3, **dadurch gekennzeichnet, dass** zwischen der Aluminiumfolie (42, 52, 72, 76) und der Schaumschicht (44, 54, 74) eine Haftschicht (43, 53, 73, 75) aus Polypropylen (PP) oder Polyethylen (PE) angeordnet ist.

5. Verbundmaterial nach einem der Ansprüche 1 bis 4, **dadurch gekennzeichnet, dass** auf einer Seite der Aluminiumfolie (32, 42, 52, 62, 72) eine Heisssiegelschicht (31, 41, 51, 61, 71) aus Polypropylen (PP) oder Polyethylen (PE) angeordnet ist.

6. Tiefgezogener Behälter und Deckel aus einem tiefziehbaren Verbundmaterial (30, 40, 50, 60, 70) mit einer Aluminiumfolie (32, 42, 52, 62, 66, 72, 76),
**dadurch gekennzeichnet, dass**
die Aluminiumfolie (32, 42, 52, 62, 66, 72, 76) einseitig mit einem geschlossenzelligen Schaum (34, 44, 54, 64, 74) aus einem Kunststoff beschichtet ist.

7. Behälter und Deckel nach Anspruch 6, **dadurch gekennzeichnet, dass** der Kunststoffschaum (34, 44, 54, 64, 74) ein extrudierter oder expandierter Schaum aus Polypropylen (PP) oder ein extrudierter Schaum aus Polyethylenterephthalat (PET; C-PET, A-PET) ist.

8. Behälter und Deckel nach Anspruch 6 oder 7, **dadurch gekennzeichnet, dass** die Schaumschicht (34, 44, 54, 64, 74) an der die Aussenseite des Behälters (10) und des Deckels (20) bildenden Seite des Verbundmaterials (30, 40, 50, 60, 70) angeordnet ist.

9. Behälter und Deckel nach Anspruch 6 oder 7, **dadurch gekennzeichnet, dass** der Kunststoffschaum (64, 74) als Kernschicht zwischen zwei Aluminiumfolien (62, 66; 72, 76) angeordnet ist.

10. Behälter und Deckel nach einem der Ansprüche 6 bis 9, **dadurch gekennzeichnet, dass** an der die Innenseite des Behälters (10) und des Deckels (20) bildenden Seite des Verbundmaterials (30, 40, 50, 60, 70) eine Heisssiegelschicht (31, 41, 51, 61, 71) aus Polypropylen (PP) oder Polyethylen (PE) angeordnet ist.

11. Deckel aus einem tiefziehbaren Verbundmaterial (30, 40, 50, 60, 70) nach einem der Ansprüche 1 bis 5.

12. Behälter (10) aus einem tiefziehbaren Verbundmaterial (30, 40, 50, 60, 70) nach einem der Ansprüche 1 bis 5 mit aufgesiegeltem Deckel (20) aus einem tiefziehbaren Verbundmaterial (30, 40, 50, 60, 70) nach einem der Ansprüche 1 bis 5.
